Europäisches Patentamt

**European Patent Office**

**Office européen des brevets**

(19)

(11) Numéro de publication: **0 042 810**

**A2**

(12)

# DEMANDE DE BREVET EUROPEEN

(21) Numéro de dépôt: **81430016.6**

(22) Date de dépôt: **19.06.81**

(51) Int. Cl.³: **F 16 B 7/00**
**E 01 F 9/01, E 01 F 13/00**
**E 04 H 12/22**

(30) Priorité: **23.06.80 FR 8014181**

(43) Date de publication de la demande:
**30.12.81 Bulletin 81/52**

(84) Etats contractants désignés:
**BE CH DE FR GB IT LI SE**

(71) Demandeur: **Sanchez, Jean-Pierre**
**20, Route de Nimes**
**F-34170 Castelnau-le-Lez(FR)**

(72) Inventeur: **Sanchez, Jean-Pierre**
**20, Route de Nimes**
**F-34170 Castelnau-le-Lez(FR)**

(74) Mandataire: **Azais, Henri et al,**
**c/o CABINET BEAU DE LOMENIE 14, rue Raphael**
**F-13008 Marseille(FR)**

(54) **Dispositif d'accouplement élastique pour assembler bout à bout et coaxialement deux tronçons de tube et applications.**

(57) L'invention a pour objet des dispositifs d'accouplement élastique pour assembler bout à bout coaxialement deux tubes.

Un dispositif selon l'invention comporte une pièce (3) portant un embout mâle (3a) qui est fixée à l'extrémité d'un premier tube (1a) et une deuxième pièce (4) portant une portée femelle (4a) qui est fixée à une extrémité d'un deuxième tube (1b). Les deux pièces sont traversées par un alésage axial (3b, 4b) à travers lequel passe un câble (5) portant deux bouts de tige filetée (6,7) sur lesquelles sont engagés deux disques perforés (12 et 13) prenant appui chacune sur un ressort (10, 11) qui est mis en tension par le serrage d'un écrou (14,15).

Une application est la construction de supports tubulaires verticaux exposés aux chocs de véhicules, notamment de barrières de parkings privés.

EP 0 042 810 A2

Dispositif d'accouplement élastique pour assembler bout à bout et coaxialement deux tronçons de tube et applications.

L'invention a pour objet des dispositifs d'accouplement élastique pour assembler bout à bout et coaxialement deux tronçons de tube et des applications.

Un objectif de l'invention est de procurer des dispositifs qui permettent d'assembler bout à bout deux tronçons de tubes, de maintenir ceux-ci alignés coaxialement en l'absence d'effort exercé contre le tube, de permettre que les deux tubes puissent se déplacer l'un par rapport à l'autre, de sorte qu'en cas de choc ou de poussée, ils peuvent se plier sans qu'il y ait rupture ou déformation permanente des tubes et de ramener les deux tubes à leur position alignée dès que le choc ou l'effort externe a cessé.

Un autre objectif de l'invention est de procurer des dispositifs d'accouplement élastique permettant de construire des supports tubulaires verticaux exposés aux chocs, notamment aux chocs de véhicules, par exemple tous les supports verticaux situés le long des rues, des trottoirs, des voies ou des routes tels que par exemple les poteaux supportant les feux tricolores ou les panneaux ou flèches de signalisation ou des panneaux publicitaires, les candélabres d'éclairage, les potelets de balisage des voies etc....

Un autre objectif de l'invention est de procurer des dispositifs d'accouplement élastique qui amortissent les chocs en absorbant une partie de l'énergie.

Un autre objectif de l'invention est de procurer des barrières de parkings privés qui ne risquent pas d'être détériorées par les chocs du véhicule et qui n'abîment pas le véhicule.

Les objectifs de l'invention sont atteints au moyen de dispositifs d'accouplement élastique qui comportent :

- une pièce mâle qui comporte un embout de centrage mâle ayant un axe de révolution et qui est fixée coaxialement sur l'extrémité d'un premier tronçon de tube;

- une pièce femelle qui comporte une portée en creux épousant la forme de l'embout mâle et qui est fixée coaxialement sur l'extrémité d'un deuxième tronçon de tube, lesquelles pièces sont traversées de part en part par un alésage axial;

- un élément allongé tel qu'un câble ou une tige, qui est engagé dans lesdits alésages;

- deux dispositifs élastiques, de préférence des ressorts, qui sont disposés à l'intérieur de chaque tronçon de tube et qui prennent respectivement appui contre la face interne de l'une desdites pièces mâle et femelle;

- et des moyens pour mettre en tension ledit élément allongé en prenant appui contre les extrémités libres des deux ressorts.

De préférence, l'embout mâle et la portée femelle ont une forme conique, tronconique ou sphérique.

Selon un mode de réalisation, l'élément allongé comporte deux extrémités filetées et le dispositif comporte deux disques perforés qui sont engagés sur lesdites extrémités filetées et deux écrous qui se vissent sur les deux extrémités filetées et qui prennent appui respectivement sur l'un des deux disques perforés pour mettre en tension ledit élément allongé et pour comprimer lesdits ressorts.

De préférence, l'élément allongé est un câble qui porte à chacune de ses deux extrémités un bout de tige filetée qui est fixée au câble par un manchon.

Une première application d'un dispositif d'accouplement élastique selon l'invention est la construction de supports tubulaires exposés à des chocs, notamment de supports verticaux situés en bordure des rues et exposés aux chocs de véhicules, qui sont scellés au sol par leur extrémité inférieure et qui portent par exemple un compteur de stationnement, des panneaux ou des flèches de signalisation, des panneaux publicitaires, des feux tricolores de signalisation, des lampadaires etc... Dans ce cas, les supports comportent un accouplement élastique situé à une hauteur du sol inférieure à la hauteur des pare-chocs de voitures.

Une autre application est la construction d'organes amortisseurs de chocs implantés le long des routes et autoroutes, par exemple des potelets de balisage des virages ou des glissières de sécurité qui sont portées par des supports verticaux, lesquels potelets ou supports comportent un accouplement élastique selon l'invention dont les ressorts peuvent être très rigides, de sorte que si un véhicule quitte la route et vient les percuter, le choc est amorti.

Une autre application des dispositifs selon l'invention est la construction de barrières de parkings privés qui se déforment facilement lorsque le véhicule appuie sur elles et qui reprennent leur forme initiale sans être détériorées et sans endommager le véhicule.

L'invention a pour résultat de nouveaux dispositifs d'accouplement élastique permettant de construire des supports ou des structures tubulaires qui peuvent se déformer momentanément dans toutes les directions lorsqu'un effort externe ou un choc leur est appliqué et qui reprennent immédiatement leur forme originelle après que l'effort a cessé, grâce à l'élasticité des ressorts et à la coopération de l'embout mâle et de la portée femelle qui replacent les deux tubes en alignement.

Les dispositifs d'accouplement élastique selon l'invention constituent des articulations élastiques qui permettent un mouvement relatif des deux tubes accouplés dans n'importe quelle direction et qui ramènent automatiquement les deux tubes à l'alignement.

L'application particulière des dispositifs selon l'invention au domaine de la construction de barrières de parking privé, permet d'obtenir des barrières pratiquement incassables. On sait que les barrières ou sabots qui contrôlent l'accés des parkings privés sont très exposées aux chocs des véhicules et sont très souvent détériorées après une courte durée d'utilisation.

L'application des dispositifs d'accouplement élastique selon l'invention dans la construction de ces barrières permet d'obtenir des barrières qui, tout en étant scellées au sol ou sur une platine mobile, peuvent se déformer facilement dans toutes les directions sans subir de déformation permanente et sans endommager les véhicules.

Le mode de réalisation préférentiel de barrière de parking comportant un potelet tubulaire central composé de deux tronçons de tubes articulés entre eux par un accouplement élastique et comportant également une enveloppe creuse en un matériau déformable, qui entoure le potelet central, permet d'obtenir des barrières de parking ayant une très bonne résistance aux contraintes externes, qui n'abîment pas les véhicules. Grâce à l'adjonction d'avertisseurs à vent sonores, ces barrières signalent au conducteur les fausses manoeuvres et lui permettent d'arrêter celles-ci.

Il est précisé que les applications des accouplements élastiques décrites ne limitent pas la portée de l'invention qui s'étend à toutes les applications de ces accouplements.

La description suivante se réfère aux dessins annexés qui représentent, sans aucun caractère limitatif, un exemple de réalisation d'un accouplement élastique et des applications de celui-ci.

La figure 1 est une coupe axiale d'un dispositif d'accouplement élastique.

La figure 2 représente une application d'un accouplement élastique selon l'invention dans un support tubulaire vertical exposé aux chocs de véhicules, par exemple un support de parcmètre.

Les figures 3 et 4 sont des vues en plan de deux modes de réalisation de barrières de parking tubulaires comportant des dispositifs d'accouplement selon l'invention.

Les figures 5 et 6 sont une vue en élévation et une vue en plan d'un troisième mode de réalisation d'une barrière de parking privé, comportant un accouplement élastique selon l'invention.

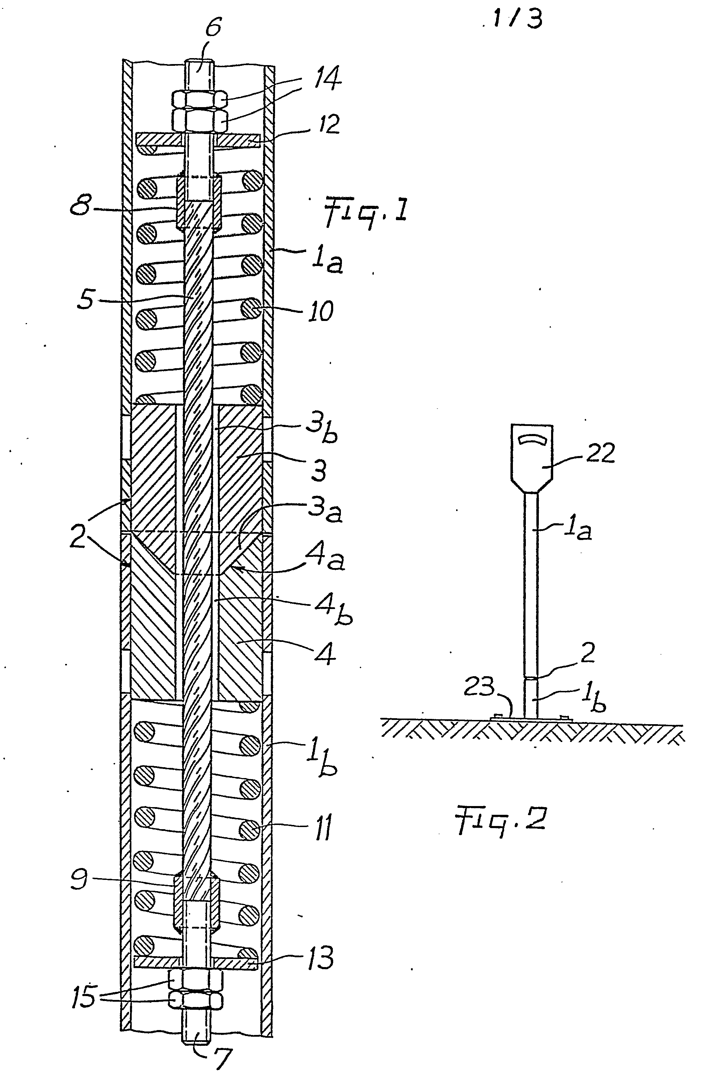

La figure 1 représente deux tubes identiques 1a, 1b, qui sont assemblés bout à bout, de façon coaxiale, par un accouplement élastique 2. L'accouplement élastique comporte une première pièce mâle 3 en forme de bouchon, qui est engagée dans l'extrémité du tube 1a et qui est soudée à celui-ci coaxialement. Cette première pièce 3 comporte, sur sa face externe qui dépasse hors du tube 1a, un embout tronconique mâle 3a.

L'accouplement élastique comporte une deuxième pièce femelle 4 en forme de bouchon qui est engagé dans l'extrémité du tube 1b et qui est également soudée à celui-ci coaxialement. La pièce 4 comporte une portée femelle tronconique 4a dans laquelle pénètre l'embout mâle 3a. L'angle d'ouverture du cône femelle est évidemment égal à l'angle au sommet de l'embout mâle.

Les pièces 3 et 4 comportent chacune un alésage axial 3b et 4b qui les traverse de part en part.

Le dispositif d'accouplement comporte un câble 5 qui est engagé dans les alésages 3b et 4b, de sorte qu'il s'étend de part et d'autre des deux pièces 3 et 4 à l'intérieur des deux tubes 1a et 1b.

Sur chaque extrémité du câble 5 est soudé un bout de tige filetée 6 et 7, par l'intermédiaire d'un manchon 8, 9.

L'accouplement 2 comporte deux ressorts 10 et 11 qui sont disposés à l'intérieur des tubes 1a et 1b respectivement entre

la face interne de chaque pièce  3 et 4  et entre un disque perforé 12, 13  qui est enfilé sur chaque tige filetée  6 et 7.

Un ensemble écrou et contre-écrou  14, 15  se visse sur l'extrémité de chaque tige filetée et prend appui sur un des disques perforé  12, 13. Les écrous permettent de mettre le câble en tension en comprimant les deux ressorts, lesquels maintiennent fortement l'embout conique emboîté dans la portée femelle d'où un assemblage des deux tubes qui sont maintenus en alignement.

Le serrage des écrous est réalisé au moyen de clefs à tube qui sont engagées par l'extrémité libre de chaque tube et qui permettent de régler la tension du câble et la compression des ressorts. Lorsque l'assemblage a été réalisé, il est invisible de l'extérieur et les deux tubes  1a et 1b  présentent l'aspect d'un seul tube. Lorsque l'un des deux tubes subit un choc ou une force externe, l'assemblage élastique se déforme momentanément mais la déformation est élastique et l'assemblage reprend sa forme originelle, grâce aux ressorts, dès que la force externe cesse.

Un dispositif d'accouplement élastique selon l'invention peut trouver des applications pour construire toutes sortes de supports tubulaires exposés à des chocs ou à des forces risquant de les déformer.

Un domaine d'applications est notamment celui des supports verticaux qui sont implantés en bordure d'une rue et exposés aux chocs et aux poussées des véhicules.

La figure  2  représente, à titre d'exemple, une application dans le cas d'un parcmètre  22, c'est-à-dire d'un compteur de stationnement qui est placé le long d'un trottoir. Le parcmètre est placé sur un support vertical composé de deux tubes  1a, 1b  assemblés par un accouplement élastique  2  selon la figure  1.

Le tube inférieur  1b  est fixé au sol par une platine  23. L'accouplement élastique  2  se trouve placé au voisinage du sol, à une hauteur inférieure à celle des parc-chocs de voiture de sorte que ceux-ci viennent heurter le tube supérieur qui peut s'incliner dans toutes les directions.

De la même façon, on peut réaliser des supports verticaux tubulaires de panneaux de signalisation, de panneaux publicitaires, de feux de signalisation, de  lampadaires etc..., placés le long des rues ou des voies et exposés aux chocs des voitures.

Outre l'avantage de se déformer élastiquement et de revenir à leur position originelle, les supports tubulaires selon l'invention présentent l'avantage que les ressorts absorbent une grande partie de l'énergie du choc et amortissent considérablement celui-ci ce qui réduit les dommages causés aux véhicules et aux passagers de ceux-ci.

Une autre application intéressante est la construction de supports amortissants pour supporter les barrières ou glissières de sécurité placées le long des routes et autoroutes ou pour constituer des potelets délimitant des routes et limitant les risques d'accident matériels et corporels dans le cas où un véhicule vient les percuter.

Une autre application des accouplements élastiques selon l'invention est la construction de barrières ou sabots de parkings individuels, c'est-à-dire de barrières verrouillables qui permettent de réserver l'accés d'un parking ou d'un box de stationnement à un utilisateur autorisé. Ces barrières de parking sont exposées aux chocs des véhicules et il est important qu'elles ne risquent pas d'être détériorées et qu'elles ne risquent pas également d'abîmer le véhicule.

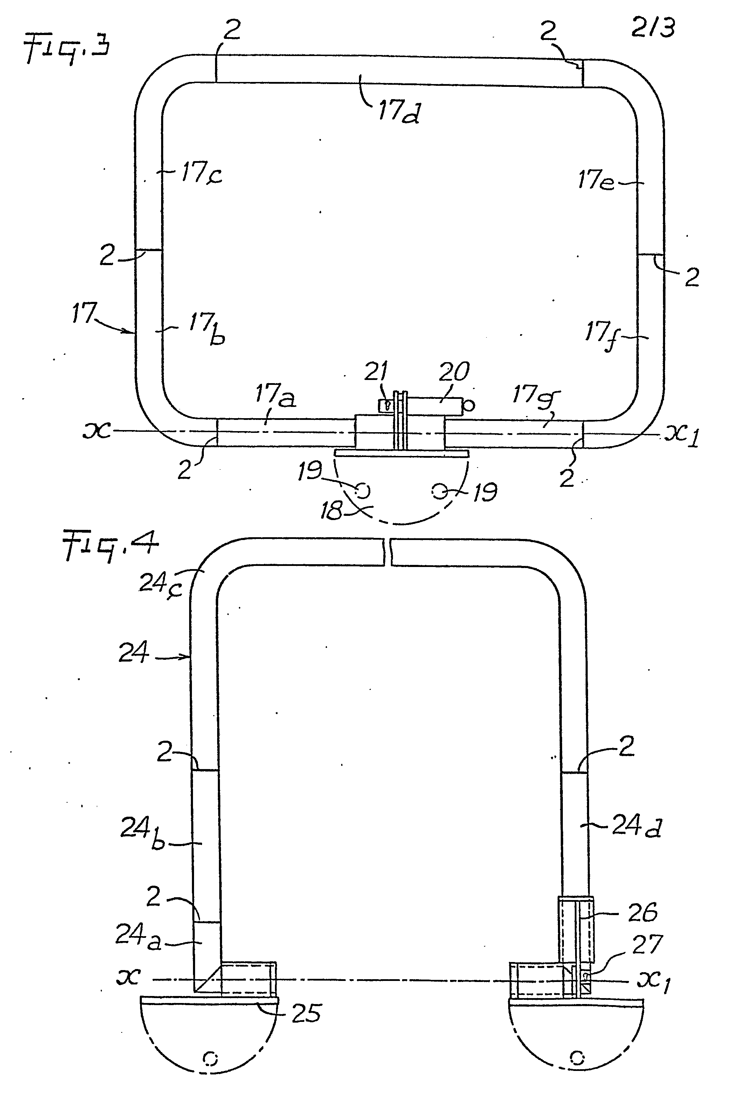

La figure 3 représente une vue en plan d'un premier mode de réalisation d'une barrière de parking. Cette barrière comporte un cadre tubulaire 17, ayant par exemple une forme rectangulaire à coins arrondis. Ce cadre est articulé autour d'un axe horizontal x x1, voisin du sol, par rapport à une platine de scellement 18 qui est scellée au sol par des tiges d'ancrage 19 ou par tout autre moyen d'ancrage équivalent.

La figure 3 représente le cadre dans la position rabattue sur le sol, dans laquelle il permet l'entrée d'un véhicule dans le parking.

Le cadre 17 peut être verrouillé en position verticale où il constitue une barrière interdisant l'accés du parking. A cet effet, il est équipé d'un dispositif de verrouillage 20 de tout type connu qui comporte une serrure 21. Le cadre 17 est composé de plusieurs tronçons de tube 17a à 17g, qui sont assemblés entre eux par des accouplements élastiques 2 conformes à ceux de la figure 1.

Dans l'exemple représenté, le cadre comporte un accouplement élastique au milieu de chacun des deux côtés qui sont verticaux en position d'interdiction de passage et deux accouplements élastiques sur chacun des deux côtés horizontaux, ce qui confère au cadre de multiples possibilités de déformation élastique. Avantageusement, le cadre 17 comporte au moins un accouplement élastique 2 sur chacun des quatre côtés.

La figure 4 représente un autre mode de réalisation d'une barrière de parking selon l'invention.

La figure 4 représente une vue en plan de la barrière rabattue contre le sol. Dans cet exemple, la barrière de parking présente la forme d'un portique 24 en U renversé. Les extrémités libres des deux montants du portique sont articulées autour d'un axe horizontal x xl, par rapport à deux platines 25 scellées au sol.

L'une des articulations comporte un système de verrouillage 26 équipé d'une serrure 27 qui permet de bloquer la barrière en position verticale pour interdire l'accès du parking.

Le portique 24 est composé de plusieurs tronçons tubulaires 24a, 24b, 24c, 24d qui sont assemblés entre eux par des accouplements élastiques 2 conformes à la figure 1. Chacun des montants verticaux du portique comporte au moins un accouplement élastique.

La figure 5 représente une coupe verticale axiale d'un troisième mode de réalisation d'une barrière de parking selon l'invention.

Cette barrière comporte une enveloppe externe 28 en un matériau souple, mais relativement résistant et incompressible à la main, tel que du caoutchouc naturel ou synthétique du type néoprène ou tout autre élastomère de synthèse. L'enveloppe 28 a la forme d'un coussin par exemple cubique, prismatique ou cylindrique ayant un axe de symétrie z zl. L'enveloppe 28 est creuse et remplie d'air à la pression atmosphérique. L'enveloppe 28 comporte une gaine axiale 29 qui la traverse de part en part. Dans cette gaine 29 est engagé un tube d'acier composé de deux tronçons 30a et 30b qui sont assemblés entre eux par un accouplement élastique 2 du type de celui de la figure 1.

Les deux tronçons de tubes 30a et 30b sont collés à la gaine 29 ou fixés à celle-ci par tout autre moyen équivalent.

Le tronçon inférieur 30b est soudé sur une plaque de base 31 prolongée par un bras 32 qui pivote autour d'un axe verticale 33 scellé dans l'angle de l'entrée du parking.

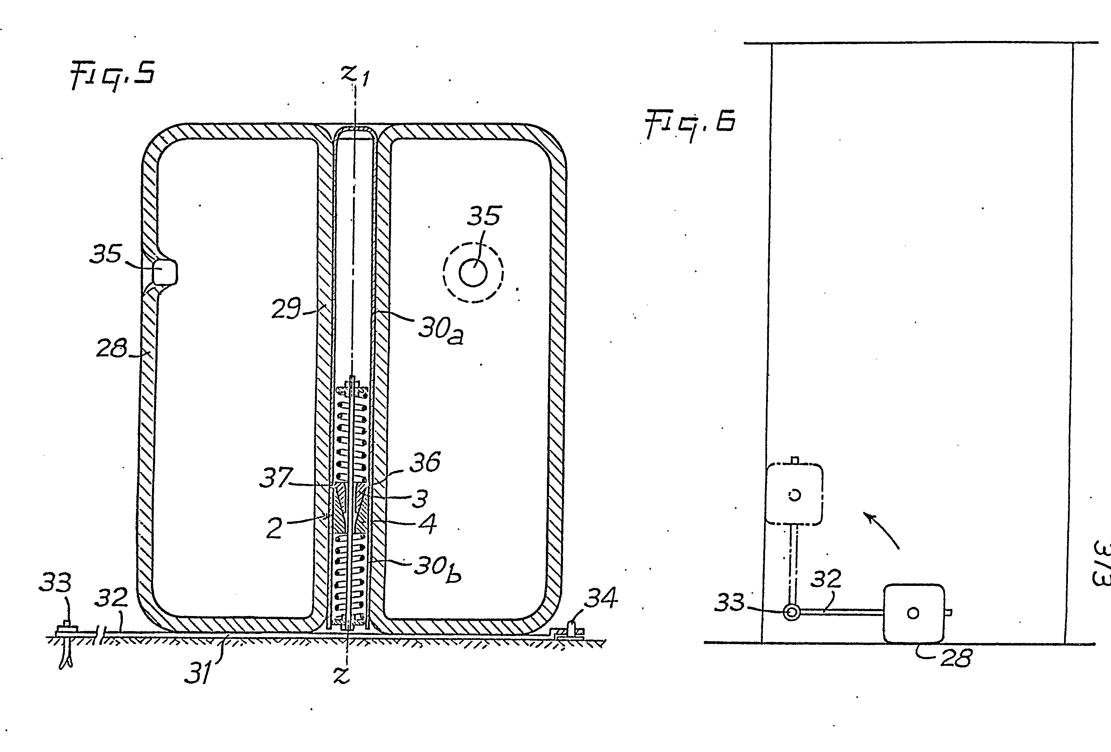

La figure 6 est une vue en plan représentant les limites d'un emplacement de parking avec, à l'entrée de celui-ci, une barrière 28 selon l'invention portée par un bras 32 articulé autour d'un axe 33 dont on voit l'implantation.

On a représenté en pointillés sur cette figure la position occupée par la barrière après une rotation de 90° autour de l'axe 33 pour libérer l'entrée du parking.

L'extrémité de la plaque de base 31 opposée à l'articulation est équipée d'un dispositif de verrouillage 34 qui permet de bloquer la barrière en position de fermeture du parking.

Avantageusement, l'enveloppe 28 comporte un ou plusieurs orifices équipés de dispositifs avertisseurs sonores 35, du type sifflet ou autres appareils à vent équivalents, qui émettent un son dès que l'enveloppe 28 subit une poussée suffisamment forte pour la déformer et pour faire sortir de l'air à travers les avertisseurs 35.

On a représenté sur la figure 5 un mode de réalisation d'un accouplement élastique, légèrement différent de celui de la figure 1.

La pièce d'accouplement mâle 3 présente la forme d'une bride 36 qui est soudée sur l'extrémité du tube 30a et qui est prolongée par un embout mâle tronconique.

La pièce d'accouplement femelle 4 comporte également une bride 37 qui est soudée sur l'extrémité du tube 30b.

Bien entendu, l'embout mâle et le logement femelle pourraient avoir des formes voisines d'un tronc de cône qui permettent d'obtenir un alignement des deux tubes et une possibilité d'inclinaison de l'un par rapport à l'autre. Par exemple, l'embout mâle pourrait présenter la forme d'une calotte sphérique et la portée femelle la forme d'une coupe sphérique.

Le mode de réalisation selon les figures 5 et 6 est un mode de réalisation préférentiel d'une barrière de parking selon l'invention.

Grâce à l'accouplement élastique 2, en cas de poussée importante d'un véhicule qui déforme entièrement l'enveloppe 28, le tube axial plie sans se rompre et revient ensuite à la position verticale, de sorte que la barrière est très résistante et pratiquement incassable. En cas de choc, même violent, d'un véhicule, l'enveloppe déformable 28 et l'accouplement élastiqut amortissent le choc et le véhicule n'est pas abîmé.

De plus, les avertisseurs sonores placés sur l'enveloppe préviennent le conducteur du véhicule dès que celui-ci commence à toucher l'enveloppe, ce qui permet d'arrêter la fausse manoeuvre avant toute détérioration du véhicule ou de la barrière.

Les dessins représentent des exemples dans lesquels l'accouplement élastique sert à assembler bout à bout deux tubes de section circulaire, mais il est évident que ces tubes pourraient avoir une section de forme différente par exemple carrée, rectangulaire ou polygonale.

Le mot tube est utilisé dans un sens non restrictif et peut également désigner des tubes ouverts sur un côté ou des profilés.

Il est également précisé que le câble 5 et les deux bouts de tige filetée 6 et 7 pourraient être remplacés par une tige souple, par exemple une tige en résine synthétique pouvant supporter des efforts de traction importants, qui serait filetée à ses deux extrémités.

Le dispositif de mise en tension du câble ou de la tige composé de deux écrous qui coopèrent avec une tige filetée pourrait être remplacé par d'autres dispositifs de mise en tension équivalents prenant appui contre les extrémités libres des deux ressorts 10 et 11.

Les ressorts 10 et 11 peuvent être remplacés par des dispositifs élastiques équivalents par exemple par des tampons en un matériau élastomère ou par des poches déformables gonflées d'air comprimé.

Le câble 5 pourrait être également remplacé par une tige rigide qui permettrait aux deux tronçons de tube de coulisser axialement l'un par rapport à l'autre.

1

R E V E N D I C A T I O N S

1. Dispositif d'accouplement élastique de deux tronçons de tubes maintenant ceux-ci bout à bout, coaxialement, et permettant un déplacement relatif des deux tronçons sous la poussée d'une force extérieure et un retour à l'alignement après que la poussée a cessé, caractérisé en ce qu'il comporte :

        - une pièce mâle (3), qui comporte un embout de centrage mâle (3a) ayant un axe de révolution et qui est fixée coaxialement sur l'extrémité d'un premier tronçon de tube (1a);

        - une pièce femelle (4), qui comporte une portée en creux (4a) épousant la forme de l'embout mâle et qui est fixée coaxialement sur l'extrémité d'un deuxième tronçon de tube (4b), lesquelles pièces (3, 4) sont traversées de part en part par un alésage axial (3b, 4b);

        - un élément allongé tel qu'un câble (5) ou une tige, qui est engagé dans lesdits alésages (3b, 4b);

        - deux dispositifs élastiques, de préférence des ressorts (10, 11), qui sont disposés à l'intérieur de chaque tronçon de tube et qui prennent respectivement appui contre la face interne de l'une desdites pièces mâle (3) et femelle (4);

        - et des moyens pour mettre en tension ledit élément allongé (5) en prenant appui contre les extrémités libres des deux ressorts (10, 11).

2. Dispositif selon la revendication 1, caractérisé en ce que ledit embout mâle (3a) et ladite portée femelle (4a) sont coniques, tronconiques ou sphériques.

3. Dispositif selon la revendication 2, caractérisé en ce que ledit élément allongé (5) comporte deux extrémités filetées et le dispositif comporte deux disques perforés (12, 13) qui sont engagés sur lesdites extrémités filetées et deux écrous qui se vissent sur les deux extrémités filetées et qui prennent appui respectivement sur l'un des deux disques perforés pour mettre en tension ledit élément flexible et pour comprimer lesdits ressorts.

4. Dispositif selon la revendication 3, caractérisé en ce que ledit élément allongé est un câble (5) qui porte à chacune de ses deux extrémités un bout de tige filetée (6, 7) qui est fixée au câble par un manchon (8,9).

5. Dispositif selon l'une quelconque des revendications

1 à 4, caractérisé en ce que lesdites pièces mâle et femelle comportent chacune une bride (36, 37) qui est soudée coaxialement sur l'extrémité de l'un des deux tronçons de tube.

6. Application d'un dispositif d'accouplement selon l'une quelconque des revendications 1 à 5, caractériséeen ce qu'il est disposé sur un support tubulaire exposé à des chocs, notamment sur un support vertical situé en bordure d'une rue et exposé aux chocs de véhicules, qui est scellé au sol par l'extrémité inférieure et qui porte par exemple un compteur de stationnement, des panneaux de signalisation, des panneaux publicitaires, des feux tricolores de signalisation, des lampadaires situés en bordure d'une rue,etc.. et ledit accouplement élastique est placé à une hauteur du sol inférieure à la hauteur des pare-chocs de voitures.

7. Application d'un dispositif d'accouplement élastique selon l'une quelconque des revendications 1 à 5, caractérisée en ce qu'il est disposé dans des supports ou organes amortisseurs de chocs implantés le long des routes ou autoroutes,par exemple sur des potelets de balisage bordant une route ou sur des supports verticaux de glissières de sécurité, chaque potelet ou chaque support de glissière comportant un accouplement élastique.

8. Application de dispositifs d'accouplement élastique selon l'une quelconque des revendications 1 à 5, caractérisée en ce que lesdits dispositifs d'accouplement sont incorporés dans des barrières de parkings privés, comportant un cadre rectangulaire (17) qui est articulé autour d'un axe horizontal (x x1) porté par une platine de scellement (18), qui comporte un dispositif de verrouillage (20, 21) en position verticale et qui est composé de plusieurs tronçons de tube (17a,...17g) qui sont assemblés entre eux par lesdits dispositifs d'accouplement élastique (2) qui sont disposés à raison d'au moins un sur chaque côté du cadre.

9. Application de dispositifs d'accouplement élastique selon l'une quelconque des revendication 1 à 5, caractérisée en ce que lesdits dispositifs d'accouplement sont incorporés dans des barrières de parkings privés, qui comportent un cadre en forme de portique (24), dont les deux extrémités sont articulées autour d'un axe horizontal (x x1) porté par deux platines de scellement (25) lequel cadre comporte un dispositif de verrouillage (26, 27) en position relevée et est composé de plusieurs tronçons de tubes (24a, 24b, 24c, 24d) reliés entre eux par lesdits accouplements élastiques (2), qui sont disposés à raison d'au moins un sur chacun des deux montants verticaux.

10. Application d'un dispositif d'accouplement élastique selon l'une quelconque des revendications 1 à 5, caractérisée en ce que ledit accouplement (2) est incorporé dans une barrière de parking privé qui comporte un tube vertical axial formé de deux tronçons (30a, 30b) assemblés entre eux par ledit accouplement (2), le tronçon inférieur (30b) étant fixé sur une plaque de base (31) qui est prolongée par un bras (32) qui est articulé autour d'un axe vertical (33) scellé au sol et qui comporte, en outre, une enveloppe creuse (28), en un matériau élastomère, laquelle comporte une gaine centrale (29) dans laquelle est engagé ledit tube axial.

11. Application selon la revendication 10, caractérisée en ce que ladite enveloppe (28) comporte un ou plusieurs orifices équipés d'un avertisseur à vent (35) sonore.

Fig.1

Fig.2

Fig.3

2    2

17d

17c    17e

2    2

17    17b    17f

21    20

17a    17g

x ————————— x₁

2    2

19    19
18

Fig.4

24c

24

2    2

24b    24d

2    26
24a    27

x ——————————— x₁

25

Fig.5

Fig.6